# EUROPEAN PATENT APPLICATION

(11) **EP 1 887 452 A1**
(43) Date of publication of application: **13.02.2008**
(21) Application number: 06270078.6
(22) Date of filing: 09.08.2006
(51) Int. Cl.: G06F 3/033

(54) **Human-Computer Interface**

(71) Applicant: STMicroelectronics (Research & Development) Limited, Marlow, Buckinghamshire SL7 1YL (GB)
(72) Inventor: Dennis, Carl, Edinburgh, Lothian EH14 7HS (GB); Hodgson, Andrew, Edinburgh, Lothian EH9 1HE (GB)
(74) Representative: McBride, Peter Hill

(57) **Abstract**

A human-computer interface comprises means for two input devices of the same type to be connected as a virtual controller, the signals from each being combined instead of being in conflict.

## Description

The present invention relates to a human-computer interface, in particular to a system and method for the control of multiple input devices.

A computer typically operates with a number of peripheral devices which are used for various functions. In the broadest sense, a device is a "peripheral" if it is optional in nature, extending to any device outside of the computer's motherboard, central processing unit (CPU) and working memory. Some peripheral devices are of course more common than others, depending on the nature of the computer and the environment in which it is used.

Peripheral devices fall broadly into categories of storage, input, output and networking devices. This invention is concerned with input devices, used for inputting data to a computer, where a computer can be any type of computing device including personal computer, laptop, games console or even a PDA or mobile telephone.

There are many different types of input device, including keyboard, pointing device, image scanner, speech recognition software, webcam, barcode reader, game controller. This is not an exhaustive list of the types of input device. A pointing device is understood to be any input device that allows a user to input spatial data to the computer, that is, for moving an on-screen object to a particular on-screen position, where an "on-screen object" is taken to be any visible indication of where a user's interaction will occur and includes for example simple cursors for word processing applications and game elements comprising one or more graphical objects that are to be controlled during the course of a computer game. Types of pointing devices include a mouse (of any kind), trackball, joystick, touch screen, light pen. Again, this list is not an exhaustive list of the types of pointing device.

A computer's display is normally used in conjunction with a single pointing device to position a cursor at a point on the display. This is practical for office applications, where the user typically wants the cursor to be in a single position at any given time - for example, for indicating where text will be entered, selecting an icon or highlighting a particular display window.

However, in computer games it is often required to control a game element that comprises two or more graphical objects that are individually controllable to perform distinct functions during performance of a game. Computer games are played on almost all types of computers, including dedicated gaming consoles and general purpose personal computers which can run a game programme. The game programme itself can be any of a very wide range of programmes, which serve for the performance of a game or leisure activity for entertainment, training or education.

To facilitate the control of many functions, gaming consoles are typically provided with dedicated game controllers, usually specific to a particular console, for control of a game. The game controller provides a number of switched inputs (typically ten or more) and one or more motion control features which give it a pointing device functionality. For instance, Sony's Analogue controller for the Playstation2 (PS2) combines a total of 15 buttons and 2 directional controls. Games on a personal computer are controlled by any chosen input device, but it is not common for a game controller to be used. Most games in that environment make use of a combination of keyboard and mouse controls.

Multiplayer games are common, where two (or more) game elements are controlled by different players, sometimes on a split screen and sometimes within the same screen, and for networked or on-line games, sometimes independent screens are displayed as different players navigate through an environment. Each of the game elements is controlled via an input device dedicated for control of that game element. The two game elements can be controlled via two input devices connected to the same computer, or in the case of a networked or an on-line game, different game elements are controlled by different computers at different locations.

As games become more complex, facilitated by developments in computers' processing power and speed, more and more options can be controlled to define a game experience. However, the number of controllable game parameters that can be designed for a game is limited by the nature of the input devices. Some video games (for example, "Halo", available on Microsoft's X-Box console) require the control of two or more functions (paddles, bats, sticks, weapons etc). Using a standard games controller means the user is required to operate specific keys or controller buttons, while using a standard personal computer set-up requires combinations of keyboard keys or buttons or combinations of mouse movement with key strokes or button presses. There is therefore a pressing need for increased input device functionality as game complexity evolves.

According to the present invention, there is provided a human computer interface comprising a first input device, a second input device of the same type as the first input device, and a processing means adapted to receive and process signals from both devices such that the devices are operable simultaneously for the control of a single on-screen object.

Preferably, the on-screen object comprises a game element for control by a player of a computer game.

Preferably, the game element comprises a number of graphical objects for individual control, said graphical objects forming as a whole a single game element.

Preferably, the input devices are both pointing devices.

Preferably, the input devices are both mice.

Preferably, the first input device is a mouse and the second input device is a trackball.

Preferably, the human-computer interface is provided on a personal computer (PC).

Preferably, the human-computer interface is provided on a dedicated games console.

According to a second aspect of the invention, there is provided a processing means adapted to receive and process signals from a plurality of input devices of the same type, and to provide a combined output for controlling a single on-screen object in response to simultaneous operation of the devices.

The processing means is, in further aspects, provided in the form of a computer program product, or driver, which can be stored on a computer readable medium. When the computer readable medium comprising the driver is run or stored on a computer, the processing means is provided for the operation of the human-computer interface of the first aspect.

The present invention will now be described with reference to the accompanying drawing, which illustrates one possible embodiment.

Many personal computers and games consoles have the facility to have multiple input devices connected simultaneously (say, using USB, PS2 or serial port) and the display is under the control of any one of them at a given instant. Where a single on-screen object is to be manipulated, if two or more input devices of the same type are connected to a single machine and are moved simultaneously, the resultant motion of the on-screen object is effectively a "data fight". The resultant movement of the on-screen object is determined by the first input device to move and signals related to all other units are ignored. The data from the input devices is not used to drive the on-screen object in an intelligent or co-ordinated manner.

This invention provides for two or more input devices of the same type to be combined into a virtual "games controller" for control of an on-screen object. Via an appropriate software driver, commands from both input devices can be combined such that when they are simultaneously operated by a user, both devices can submit control signals to the on-screen object for the performance of various different functions, rather than having to process the data from one device before processing the data from the other device.

Allowing the computer game player to control an on-screen object using two separate input devices of the same type increases the versatility and flexibility of the human-computer interface.

In a preferred embodiment, the two input devices are both pointing devices, which in a further preferred embodiment are both mice. In an example application of this embodiment, in a role-playing game, the player's right hand mouse can control features in the game character's right hand and/or feet, while the left hand mouse can control features in the game character's left hand and/or feet. This improves the realism of the game, increases the reaction speed of the user and enables additional flexibility in the games interface.

Further, the ability to use two input devices of the same type for control of the same on-screen object means that a dedicated games controller can be replaced by two more readily available input devices, such as mice or trackballs, which of course can be used for office-type applications as normally intended.

When an input device is connected to a computer, the operating system performs an enumeration or registration sequence to uniquely identify all devices that are connected. At that time driver software is loaded for each device and it is possible to associate any device with a specific (customised) driver and to enable multiple input devices. This feature can be implemented in any operating system.

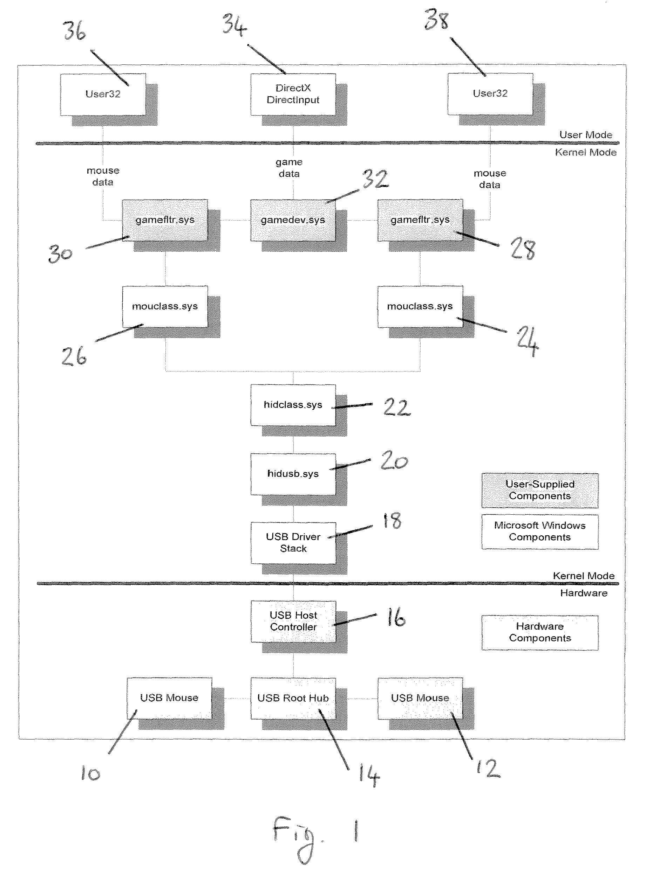

Figure 1 illustrates one possible architecture for a new human-computer interface. First and second input devices 10 and 12 are connected via a hub 14 to a host controller 16. these define the hardware components required for the system. The host controller then interacts with a driver stack 18 of the operating system, the kernel mode of which is represented by the middle section of the figure. The data from the input devices 10 is interpreted by a human interface device (HID) class enumerator 22 and HID mini driver 20, which pass the data in the correct format to device-specific drivers 24,26. Additional components 28,30 duplicate the device data to both the user subsystem of the operating system at user portions 36,38 (shown at the top portion of the figure) and the supplied game port driver 32, which creates the game device and registers with gaming device 34 in the user mode.

In a preferred embodiment, both the input devices are USB mice, and the operating system is a Microsoft Windows environment, as shown by the (optional) text of Fig. 1.

Various improvements and modifications can be made to the above without departing from the scope of the invention.

## Claims

1. A human computer interface (HCl) comprising a plurality of input devices of the same type and a processing means adapted to receive and process signals from both devices such that the devices are operable simultaneously for the control of a single on-screen object.

2. The HCl of claim 1, wherein the on-screen object comprises a game element for control by a player of a computer game.

3. The HCl of claim 2, wherein the game element comprises a number of graphical objects for individual control, said graphical objects forming as a whole a single game element.

4. The HCl of any preceding claim, wherein the input devices are all pointing devices.

5. The HCl of claim 4, wherein the input devices are all mice.

6. The HCl of claim 4, wherein the input devices comprise at least one mouse and at least one trackball.

7. The HCl of any preceding claim, provided on a personal computer (PC).

8. The HCl of any of claims 1-6, provided on a dedicated games console.

9. A processing means adapted to receive and process signals from a plurality of input devices of the same type, and to provide a combined output for controlling a single on-screen object in response to simultaneous operation of the devices.

10. The processing means of claim 9, provided with a plurality of input devices to form the HCl of any of claims 1 to 8.

11. A computer program product comprising driver means that, when run on a computer, provides the processing means of claim 9 or claim 10.

12. A computer readable medium comprising the computer program product of claim 11.
